# EUROPÄISCHE PATENTSCHRIFT

(11) **EP 2 745 187 B1**
(45) Veröffentlichungstag und Bekanntmachung des Hinweises auf die Patenterteilung: **02.01.2019**
(21) Anmeldenummer: 12743150.0
(22) Anmeldetag: 01.08.2012
(51) Int. Cl.: G06F 3/01, G06F 3/046

(54) **BEDIENEINRICHTUNG**
OPERATOR CONTROL DEVICE
DISPOSITIF DE COMMANDE

(30) Priorität: 17.08.2011 DE 102011111543
(43) Veröffentlichungstag der Anmeldung: 25.06.2014
(73) Patentinhaber: Continental Automotive GmbH, 30165 Hannover (DE)
(72) Erfinder: KERN, Thorsten Alexander, 64665 Alsbach (DE); ZOLLER, Ingo, 63768 Hösbach (DE)
(86) Internationale Anmeldenummer: PCT/EP2012/065039
(87) Internationale Veröffentlichungsnummer: WO 2013/023922

(56) Entgegenhaltungen:
- WO-A1-2006/124873
- US-A1- 2005 017 947
- Christoph Doerrer: "Entwurf eines elektromechanischen Systems für flexibel konfigurierbare Eingabefelder mit haptischer Rückmeldung", , 1. Januar 2003 (2003-01-01), Seiten 1-161, XP55037374, Gefunden im Internet: URL:http://tuprints.ulb.tu-darmstadt.de/43 5/1/diss_doerrer.pdf [gefunden am 2012-09-06]

## Beschreibung

Die Erfindung bezieht sich auf eine Bedieneinrichtung mit einem Betätigungselement mit haptischer Rückmeldung, das eine berührungssensitive Bedienfläche aufweist, wobei das Betätigungselement von einer Bedienperson mittels eines Eingabeorgans betätigbar ist, mit einem ersten und einem zweiten flächigen Bauteil, die aus einem ferromagnetischen Werkstoff bestehen und mit ihren großen Flächen parallel zueinander ausgerichtet sind und das erste flächige Bauteil horizontal relativ zum feststehenden zweiten flächigen Bauteil geführt verschiebbar antreibbar ist, wobei das erste flächige Bauteil das Bedienelement bildet oder seine Bewegung ganz oder teilweise auf das Bedienelement überträgt, mit einer Spule oder einem elektrischen Leiter, die oder der zwischen den flächigen Bauteilen angeordnet und einem ersten Polschuh zugeordnet ist, der mit dem zweiten flächigen Bauteil verbunden ist und zu dem ersten flächigen Bauteil ragt, und wobei durch Bestromung der Spule oder des Leiters ein Magnetfeld erzeugbar ist, durch das das erste flächige Bauteil aus einer Ruhelage in eine Verschiebelage horizontal relativ zum zweiten flächigen Bauteil verschiebbar antreibbar ist.

Haptische Rückmeldungen von Bedienelementen werden vor allem dann gefordert, wenn eine Bedienperson den von ihr ausgeführten Bedienvorgang nicht direkt wahrnehmen kann. Während bei Bedienvorrichtungen mit elektromechanischen Schaltern für die Bedienperson das Öffnen oder Schließen der Schaltkontakte durch eine sich ändernde Haptik des Bedienelements wahrnehmbar ist, ist dies bei elektronischen Schaltern nicht notwendigerweise vorhanden. Deshalb sind im Stand der Technik Bedienelemente bekannt, die mittels für die Bedienperson wahrnehmbaren Bewegungen des Bedienelements eine haptische Rückmeldung über einen erfolgten Bedienvorgang geben. Die bekannten haptischen Bedienelemente beispielsweise für sogenannte Touchscreens erfordern einen großen Bauraum, einen aufwendigen Antrieb und besondere konstruktive Maßnahmen, wenn diese beispielsweise in einem Umfeld eingesetzt werden sollen, das von besonders großen Temperaturunterschieden geprägt ist, wie es beispielsweise in einem Kraftfahrzeug der Fall ist, welches sowohl in arktischer Kälte als auch in sommerlicher Hitze seine Funktionsfähigkeit erhalten muss.

Die WO 2006/124873A1 beschreibt eine haptische Bedienungseinrichtung mit den Merkmalen des Oberbegriffs des Patentanspruch 1.

Aufgabe der Erfindung ist es eine Bedieneinrichtung der eingangs genannten Art zu schaffen, die eine geringe Gesamtbauhöhe und einen einfachen Aufbau aufweist.

Diese Aufgabe wird erfindungsgemäß mit den Merkmalen des Patentanspruch 1 gelöst.

Bei einer Bestromung der Spule oder des Leiters wird ein Magnetfeld erzeugt, wobei der magnetische Fluss über den ersten Polschuh zum zweiten Polschuh fließt und dadurch mit einer Kraftkomponente auf den zweiten Polschuh einwirkt, durch die der zweite Polschuh von dem ersten Polschuh und dadurch der horizontale Versatz vom ersten und zweitem Polschuh minimiert wird. Dabei kommt es zu keiner Berührung der beiden Polschuhe.

Die horizontale Bewegungskomponente führt zu einer Anregung der sensorischen Organe der Bedienperson. Da die Bedienperson bei kleinen Anregungen im Wesentlichen die Amplitude der Anregung, nicht aber die Richtung wahrnimmt, ist die Bewegung des ersten flächigen Bauteils auch als senkrecht zur Anregungsrichtung wahrgenommener Bewegungseindruck möglich.

Durch die erfindungsgemäße Ausbildung wird ein flach aufbauender Antrieb aus einfachen Komponenten erreicht.

Die flächigen Bauteile mit den Polschuhen können in einfache Weise als Stanz-Biegeteile aus Blech ausgebildet sein.

Zu der dem ersten Polschuh zugeordneten Spule oder des Leiters kann alternativ oder zusätzlich eine zweite Spule und/oder ein zweiter elektrischer Leiter dem zweiten Polschuh zugeordnet sein.

Vorzugsweise sind mit dem zweiten flächigen Bauteil mehrere erste Polschuhe verbunden, denen jeweils ein elektrischer Leiter und entsprechende mit dem ersten flächigen Bauteil verbundene zweite Polschuhe zugeordnet sind.

Zwischen dem freien Ende des ersten Polschuhs und dem freien Ende des zweiten Polschuhs kann ein axialer Abstand bestehen.

Dabei können die einander zugewandten Stirnflächen des ersten und des zweiten Polschuhs in der Ruhelage des ersten flächigen Bauteils nicht oder mit weniger als der Hälfte ihrer Erstreckung in Bewegungsrichtung des ersten flächigen Bauteils und in der Verschiebelage des ersten flächigen Bauteils in größerer Überdeckung als in der Ruhelage sein.

Ist nur ein erster und ein zweiter Polschuh vorhanden, ist es zum gleichmäßigen Kraftangriff von Vorteil, wenn der erste Polschuh sich mittig zur Länge in Bewegungsrichtung des ersten flächigen Bauteils von dem zweiten flächigen Bauteil weg erstreckt und/oder der zweite Polschuh sich mittig zur Länge in Bewegungsrichtung des ersten flächigen Bauteils von dem ersten flächigen Bauteil weg erstreckt.

Eine andere Möglichkeit besteht darin, dass der erste Polschuh um ein solches Maß zum ersten flächigen Bauteil und der zweite Polschuh um ein solches Maß zum zweiten flächigen Bauteil ragt, dass sich die freien Endbereiche von erstem Polschuh und zweitem Polschuh in einem Abstand in Bewegungsrichtung des ersten flächigen Bauteils gegenüberliegen.

Zu einem guten Magnetfluss zwischen den beiden Polschuhen führt es, wenn die einander gegenüberliegenden Stirnflächen der Polschuhe sich parallel zueinander erstrecken.

Die einander gegenüberliegenden Stirnflächen der Polschuhe können entweder sich parallel zu den Ebenen des ersten und zweiten flächigen Bauteils oder zur Verringerung der Bauhöhe sich gegenüber den Ebenen des ersten und zweiten flächigen Bauteils geneigt erstrecken, wobei die einander gegenüberliegenden Stirnflächen der Polschuhe vorzugsweise in Bewegungsrichtung des ersten flächigen Bauteils geneigt sind.

Um das erste flächige Bauteil nach Beendigung der Bestromung der Spule oder des Leiters aus der Verschiebelage wieder in die Ruhelage zurückzuführen, kann in einfacher Weise das erste flächige Bauteil entgegen einer Federkraft aus der Ruhelage in die Verschiebelage horizontal relativ zum zweiten flächigen Bauteil verschiebbar antreibbar sein.

Eine andere Möglichkeit zum Bewegungsantrieb des ersten flächigen Bauteils in beide Bewegungsrichtungen besteht darin, dass ein Paar erste Polschuhe in einem Abstand zueinander in Bewegungsrichtung des ersten flächigen Bauteils angeordnet sind, zwischen die ein zweiter Polschuh oder ein Paar zweite Polschuhe ragt, wobei der zweite Polschuh oder das Paar zweiter Polschuhe zwischen dem Paar erster Polschuhe zwischen der Ruhelage und der Verschiebelage bewegbar angeordnet sind und wobei die den Polschuhen des ersten Paares Polschuhe zugeordneten Spulen oder elektrischen Leiter alternierend bestrombar sind.

Die Spule kann den ersten Polschuh umschließen.

In einer anderen einfach aufgebauten und hochwirksamen Ausbildung können der erste und der zweite Polschuh sich quer zur Bewegungsrichtung des ersten flächigen Bauteils erstrecken und der elektrische Leiter entlang der Längserstreckung des ersten Polschuhs geführt sein.

Dabei können eine Mehrzahl an ersten Polschuhen kammartig mit einem sich in Bewegungsrichtung des ersten flächigen Bauteils erstreckenden, die einen Enden der ersten Polschuhe miteinander verbindenden Verbindungselement ausgebildet sein und der elektrische Leiter sich meandrierend durch die Zwischenräume zwischen den ersten Polschuhen erstrecken und den ersten Polschuhen kann eine entsprechende Anzahl an zweiten Polschuhen zugeordnet sein, die kammartig mit einer sich in Bewegungsrichtung des flächigen Bauteils erstreckenden, die einen Enden der zweiten Polschuhe miteinander verbindenden Verbindungselement ausgebildet sein.

Ausführungsbeispiele der Erfindung sind in der Zeichnung dargestellt und werden im Folgenden näher beschrieben. Es zeigen:
- Figur 1: einen Längsschnitt eines ersten Ausführungsbeispiels einer Bedieneinrichtung,
- Figur 2: einen Längsschnitt eines ersten und zweiten Polschuhs der Bedieneinrichtung nach Figur 1 mit Flussführung des magnetischen Flusses,
- Figur 3: einen Längsschnitt eines zweiten Ausführungsbeispiels einer Bedieneinrichtung,
- Figur 4: einen Längsschnitt eines ersten und zweiten Polschuhs der Bedieneinrichtung nach Figur 3 mit Flussführung des magnetischen Flusses,
- Figur 5: einen Längsschnitt eines dritten Ausführungsbeispiels einer Bedieneinrichtung,
- Figur 6: einen Längsschnitt eines vierten Ausführungsbeispiels einer Bedieneinrichtung,
- Figur 7: eine Draufsicht auf die flächigen Bauteile mit Polschuhen der Bedieneinrichtung nach Figur 6,

- Figur 8: einen Längsschnitt eines fünften Ausführungsbeispiels einer Bedieneinrichtung.

Die dargestellten Bedieneinrichtungen weisen ein erstes flächiges Bauteil 1 und ein in einem Abstand parallel zum ersten flächigen Bauteil angeordnetes zweites flächiges Bauteil 2 auf.

Beide flächigen Bauteile 1 und 2 bestehen aus einem ferromagnetischen Werkstoff.

Das zweite flächige Bauteil 2 ist feststehend angeordnet, während das erste flächige Bauteil 1 zwischen einer Ruhelage und einer Verschiebelage parallel zum zweiten flächigen Bauteil 2 bewegbar geführt ist.

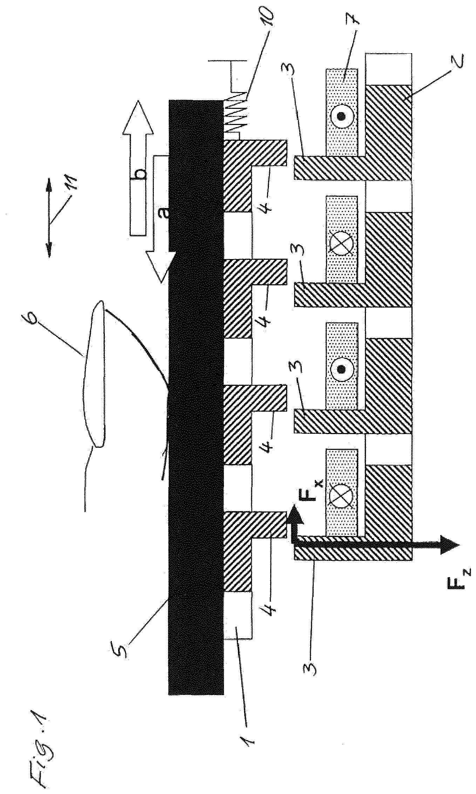

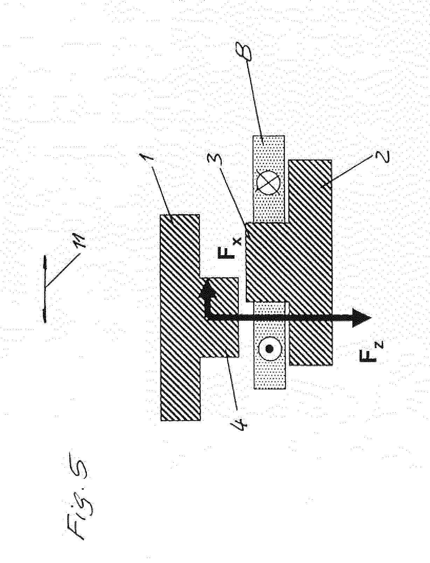

Das zweite flächige Bauteil 2 weist ein (Figur 5) oder mehrere (Figuren 1 bis 4 und 6 bis 8) aus der Ebene des zweiten flächigen Bauteils 2 rechtwinklig zum ersten flächigen Bauteil 1 gerichtete erste Polschuhe 3 auf.

Das erste flächige Bauteil 1 weist entsprechend den ersten Polschuhen 3 ein (Figur 5) oder mehrere (Figuren 1 bis 4 und 6 bis 8) aus der Ebene des ersten flächigen Bauteils 1 rechtwinklig zum zweiten flächigen Bauteil 2 gerichtete zweite Polschuhe 4 auf.

In der Ruhelage des ersten flächigen Bauteils 1 weisen die zweiten Polschuhe 4 einen größeren seitlichen Versatz zu den ersten Polschuhen 3 auf als in der Verschiebelage.

In Figur 1 ist auf der dem zweiten flächigen Bauteil 2 abgewandten Seite des ersten flächigen Bauteils 1 eine berührungssensitive Bedienfläche 5 angeordnet, bei deren Berührung durch ein Eingabeorgan wie z.B. einen Finger 6 ein Signal erzeugt wird, das zu einer Bestromung von einem den ersten Polschuhen 3 zugeordneten elektrischen Leitern 7 (Figuren 1 bis 4 und 6 bis 8) oder einer ringartigen Spule 8 führt.

In den weiteren Figuren ist die Berührungsintensive Bedienfläche 5 nicht dargestellt, aber vorhanden.

Durch die Bestromung des Leiters 7 oder der Spule 8 wird ein Magnetfeld erzeugt, dessen magnetischer Fluss 9 durch die zweiten Polschuhe 4 zu den ersten Polschuhen 3 fließt und auf die zweiten Polschuhe 4 eine zu den ersten Polschuhen 3 anziehende Kraft ausübt.

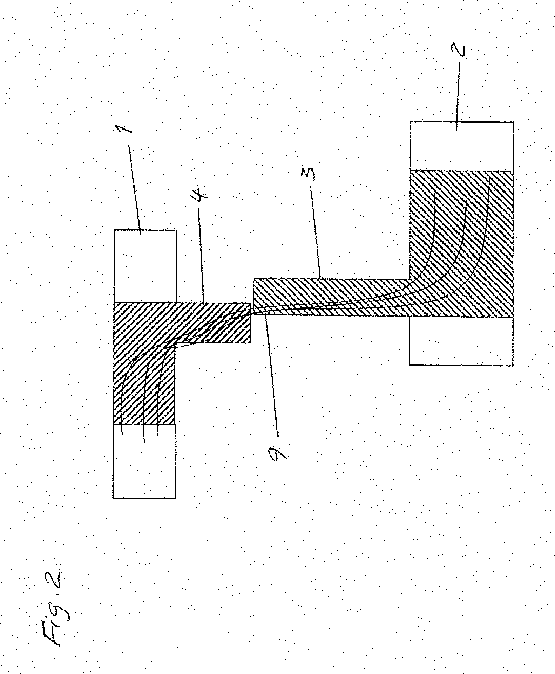

Durch die horizontale Komponente Fₓ dieser Kraft wird das erste flächige Bauteil 1 der Ausführungsbeispiele der Figuren 1 bis 7 entgegen der Kraft einer Zugfeder 10 aus seiner Ruhelage in seine Verschiebelage bewegt. Die dabei auftretende Flußführung des magnetischen Flusses zwischen dem ersten und zweiten Polschuh 3 und 4 ist in Figur 2 dargestellt.

Die sich in Erstreckungsrichtung des ersten flächigen Bauteils 1 erstreckende vorgespannte Zugfeder 10 ist mit ihrem einen Ende fest angeordnet und greift mit ihrem anderen Ende an dem ersten flächigen Bauteil 1 an.

Durch alternierendes Bestromen und Nichtbestromen wird das erste Bauteil 1 und mit ihm die Bedienfläche 5 alternierend bewegt, was von der Bedienperson über den Finger 6 haptisch wahrgenommen wird.

Zwischen den freien Enden der ersten und zweiten Polschuhe 3 und 4 ist ein axialer Abstand, so dass sich die beiden Polschuhe 4 bei einer Bestromung des elektrischen Leiters 7 aus der gegenüber den ersten Polschuhen 3 seitlich versetzten Ruhelage in die Verschiebelage bewegen können, in der sich die Stirnseiten der ersten und zweiten Polschuhe 3 und 4 zumindest weitgehend gegenüberliegen.

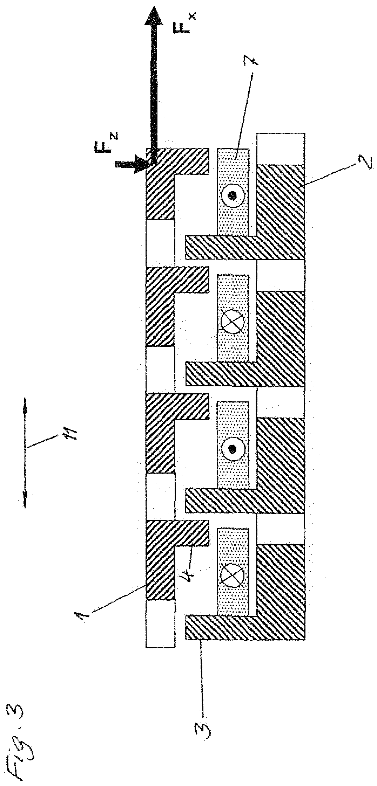

Der Aufbau der Bedieneinrichtung der Figuren 2 und 3 entspricht weitgehend dem Aufbau der Bedieneinrichtung der Figuren 1 und 2, wobei die Bedienfläche und die Zugfeder 10 nicht dargestellt sind.

Im Unterschied zu den Figuren 1 und 2 erstrecken sich die Polschuhe 3 und 4 so weit, dass sie sich mit einem Teil ihrer Länge in Bewegungsrichtung 11 des ersten flächigen Bauteils 1 gegenüberliegen.

Bei einer Bestromung des elektrischen Leiters 7 werden die zweiten Polschuhe 4 und mit ihnen das erste flächige Bauteil 1 aus der gegenüber den ersten Polschuhen 3 seitlich versetzen Ruhelage in die Verschiebelage bewegt, in der die zweiten Polschuhe 4 sich nahe den ersten Polschuhen 3 befinden ohne sie jedoch zu berühren.

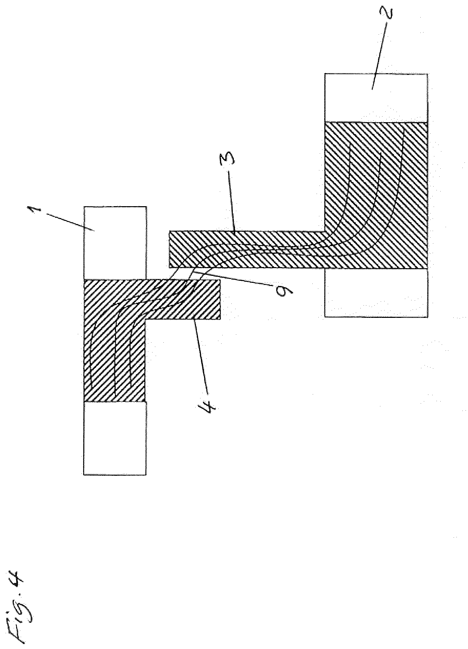

Die dabei auftretende Flussführung des magnetischen Flusses zwischen den ersten und zweiten Polschuhen 3 und 4 ist in Figur 4 dargestellt.

Das Ausführungsbeispiel der Figur 5 weist jeweils nur einen ersten und zweiten Polschuh 3 und 4 auf, die jeweils mittig zur Länge des ersten und zweiten flächigen Bauteils 1 und 2 in Bewegungsrichtung 11 angeordnet sind.

Der erste Polschuh 3 ist dabei von einer ringförmigen Spule 8 umschlossen.

Die Funktion entspricht der Funktion des Ausführungsbeispiels der Figuren 1 und 2.

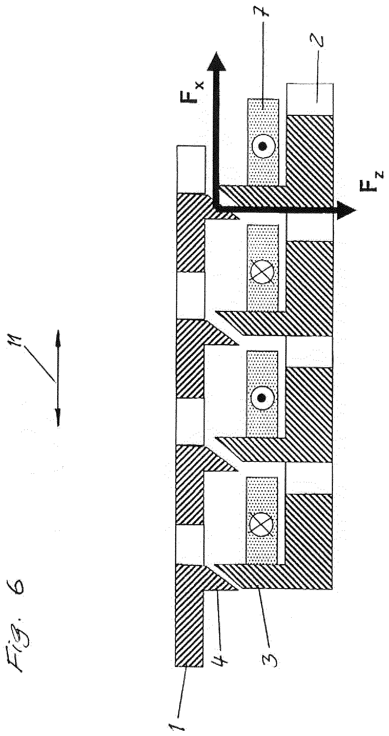

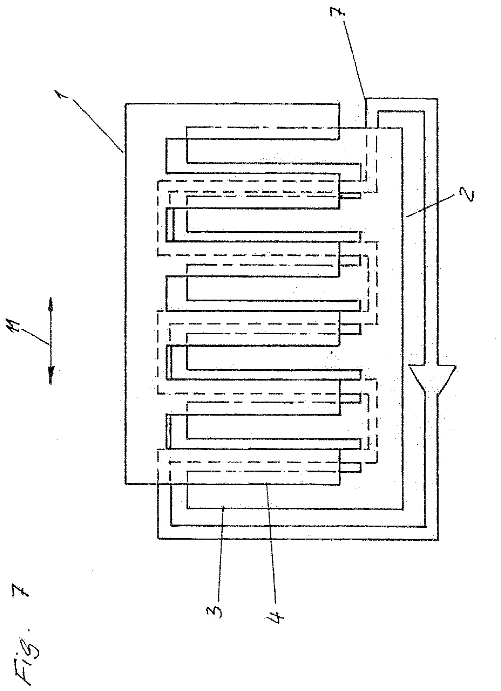

Das Ausführungsbeispiel der Figuren 6 und 7 entspricht weitgehend dem Ausführungsbeispiel der Figuren 1 und 2 mit dem Unterschied, dass sich die einander gegenüberliegenden Stirnflächen der Polschuhe 3 und 4 nicht parallel zu den Ebenen des ersten und zweiten flächigen Bauteils 1 und 2 erstrecken, sondern in Bewegungsrichtung des ersten flächigen Bauteils 1 geneigt erstrecken.

Wie aus der Figur 7 zu sehen ist, sind die ersten Polschuhe 3 kammartig mit einem sich in Bewegungsrichtung 11 erstreckenden, die einen Enden der ersten Polschuhe 3 miteinander verbindenden Verbindungselement ausgebildet, wobei das Verbindungselement das zweite flächige Bauteil 2 bildet.

Entsprechend sind die zweiten Polschuhe 4 mit einem sich in Bewegungsrichtung 11 erstreckenden, die einen Enden der zweiten Polschuhe 4 miteinander verbindenden Verbindungselement ausgebildet, wobei das Verbindungselement das erste flächigen Bauteil 1 bildet.

Der elektrische Leiter 7 ist dabei meandrierend durch die Zwischenräume zwischen den ersten Polschuhen 3 geführt.

Die Ausbildung der ersten und zweiten flächigen Bauteile 1 und 2 und der ersten und zweiten Polschuhe 3 und 4 sowie des elektrischen Leiters 7 der Ausführungsbeispiele der Figuren 1 bis 4 entspricht der in Figur 7 dargestellten Ausbildung.

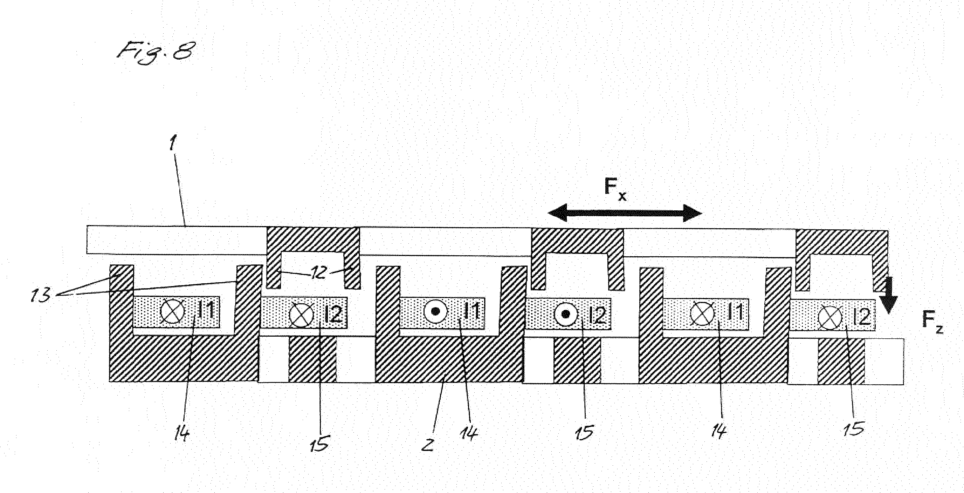

Bei dem Ausführungsbeispiel der Figur 8 weist das erste flächige Bauteil 1 mehrere in Bewegungsrichtung 11 im Abstand zueinander angeordnete Paare von zweiten Polschuhen 12 und das zweite flächige Bauteil 2 mehrere in Bewegungsrichtung 11 im Abstand zueinander angeordnete Paare von ersten Polschuhen 13 auf.

Die Paare von ersten und zweiten Polschuhen 13 und 12 sind entsprechen Figur 7 kammartig ausgebildet und ein erster elektrischer Leiter 14 sowie ein zweiter elektrischer Leiter 15 meandrierend durch die Zwischenräume zwischen den Paaren erster Polschuhe 13 geführt.

In die Zwischenräume zwischen den Paaren erster Polschuhe 13 ragen die Paare zweiter Polschuhe 12, wobei die Erstreckung der Paare zweiter Polschuhe 12 in Bewegungsrichtung 11 geringer ist als der Abstand zwischen den Paaren erster Polschuhe 13.

Durch alternierende Bestromung von erstem und zweitem elektrischem Leiter 14 und 15 werden alternierend Magnetfelder erzeugt, durch die Paare zweiter Polschuhe 12 in Bewegungsrichtung 11 alternierend nach rechts in die Ruhelage und nach links in die Verschiebelage bewegt werden.

## Patentansprüche

1. Bedieneinrichtung mit einem Betätigungselement mit haptischer Rückmeldung, das eine berührungssensitive Bedienfläche (5) aufweist, wobei das Betätigungselement von einer Bedienperson mittels eines Eingabeorgans (6) betätigbar ist, mit einem ersten und einem zweiten flächigen Bauteil (1, 2), die aus einem ferromagnetischen Werkstoff bestehen und mit ihren großen Flächen parallel zueinander ausgerichtet sind und das erste flächige Bauteil (1) horizontal relativ zum feststehenden zweiten flächigen Bauteil (2) geführt verschiebbar antreibbar ist, wobei das erste flächige Bauteil (1) das Bedienelement bildet oder seine Bewegung ganz oder teilweise auf das Bedienelement überträgt, mit einer Spule (8) oder einem elektrischen Leiter, die oder der zwischen den flächigen Bauteilen (1, 2) angeordnet und einem ersten Polschuh zugeordnet ist, der mit dem zweiten flächigen Bauteil (2) verbunden ist und zu dem ersten flächigen Bauteil (1) ragt, und wobei durch Bestromung der Spule (8) oder des Leiters ein Magnetfeld erzeugbar ist, durch das das erste flächige Bauteil (1) aus einer Ruhelage in eine Verschiebelage horizontal relativ zum zweiten flächigen Bauteil (2) verschiebbar antreibbar ist, **dadurch gekennzeichnet, dass** das erste flächige Bauteil (1) mit einem zweiten Polschuh (4, 12) verbunden ist, der zum zweiten flächigen Bauteil (2) ragt und in der Ruhelage des ersten flächigen Bauteils (1) gegenüber dem ersten Polschuh (3, 13) in Erstreckungsrichtung der flächigen Bauteile (1, 2) derart seitlich versetzt ist, dass bei Bestromung des Leiters (7) oder der Spule (8) ein Magnetfluss (9) vom ersten Polschuh (3, 13) zum zweiten Polschuh (4, 12) auftritt.

2. Bedieneinrichtung nach einem der vorhergehenden Ansprüche, **dadurch gekennzeichnet, dass** mit dem zweiten flächigen Bauteil (2) mehrere erste Polschuhe (3, 13) verbunden sind, denen jeweils ein elektrischer Leiter (7, 14, 15) und entsprechende mit dem ersten flächigen Bauteil (1) verbundene zweite Polschuhe (4, 12) zugeordnet sind.

3. Bedieneinrichtung nach einem der vorhergehenden Ansprüche, **dadurch gekennzeichnet, dass** zwischen dem freien Ende des ersten Polschuhs (3) und dem freien Ende des zweiten Polschuhs (4) ein axialer Abstand besteht.

4. Bedieneinrichtung nach Anspruch 4, **dadurch gekennzeichnet, dass** die einander zugewandten Stirnflächen des ersten und des zweiten Polschuhs (3, 4) in der Ruhelage des ersten flächigen Bauteils (1) nicht oder mit weniger als der Hälfte ihrer Erstreckung in Bewegungsrichtung (11) des ersten flächigen Bauteils (1) und in der Verschiebelage des ersten flächigen Bauteils (1) in größerer Überdeckung als in der Ruhelage sind.

5. Bedieneinrichtung nach einem der Ansprüche 1 und 2, **dadurch gekennzeichnet , dass** der erste Polschuh (3, 13) um ein solches Maß zum ersten flächigen Bauteil (1) und der zweite Polschuh (4, 12) um ein solches Maß zum zweiten flächigen Bauteil (2) ragt, dass sich die freien Endbereiche von erstem Polschuh (3, 13) und zweitem Polschuh (4, 12) in einem Abstand in Bewegungsrichtung (11) des ersten flächigen Bauteils (1) gegenüberliegen.

6. Bedieneinrichtung nach einem der vorhergehenden Ansprüche, **dadurch gekennzeichnet, dass** die einander gegenüberliegenden Stirnflächen der Polschuhe (3, 4) sich parallel zueinander erstrecken.

7. Bedieneinrichtung nach einem der vorhergehenden Ansprüche, **dadurch gekennzeichnet, dass** die einander gegenüberliegenden Stirnflächen der Polschuhe (3, 4) sich parallel zu den Ebenen des ersten und zweiten flächigen Bauteils (1, 2) erstrecken.

8. Bedieneinrichtung nach einem der Ansprüche 1 bis 6, **dadurch gekennzeichnet, dass** die einander gegenüberliegenden Stirnflächen der Polschuhe (3, 4) sich gegenüber den Ebenen des ersten und zweiten flächigen Bauteils (1, 2) geneigt erstrecken.

9. Bedieneinrichtung nach einem der vorhergehenden Ansprüche, **dadurch gekennzeichnet, dass** das erste flächige Bauteil (1) entgegen einer Federkraft aus der Ruhelage in die Verschiebelage horizontal relativ zum zweiten flächigen Bauteil (2) verschiebbar antreibbar ist.

10. Bedieneinrichtung nach einem der Ansprüche 1 bis 8, **dadurch gekennzeichnet, dass** ein Paar erste Polschuhe (13) in einem Abstand zueinander in Bewegungsrichtung (11) des ersten flächigen Bauteils (1) angeordnet sind, zwischen die ein zweiter Polschuh oder ein Paar zweite Polschuhe (12) ragt, wobei der zweite Polschuh oder das Paar zweiter Polschuhe (12) zwischen dem Paar erster Polschuhe (13) zwischen der Ruhelage und der Verschiebelage bewegbar angeordnet sind, wobei jedem Paar erster Polschuhe (13) zwei Spulen oder elektrische Leiter (14, 15) zugeordnet sind, die alternierend bestrombar sind.

11. Bedieneinrichtung nach einem der vorhergehenden Ansprüche, **dadurch gekennzeichnet, dass** die Spule (8) den ersten Polschuh (3) umschließt.

12. Bedieneinrichtung nach einem der Ansprüche 1 bis 11, **dadurch gekennzeichnet, dass** der erste und der zweite Polschuh sich quer zur Bewegungsrichtung (11) und parallel zum ersten flächigen Bauteil (1) erstreckt und der elektrische Leiter (7) entlang der Längserstreckung des ersten Polschuhs (3) geführt ist.

13. Bedieneinrichtung nach Anspruch 12, **dadurch gekennzeichnet, dass** eine Mehrzahl an ersten Polschuhen (3) kammartig mit einem sich in Bewegungsrichtung (11) des ersten flächigen Bauteils (1) erstreckenden, die einen Enden der ersten Polschuhe (3) miteinander verbindenden Verbindungselement ausgebildet sind und der elektrische Leiter (7) sich meandrierend durch die Zwischenräume zwischen den ersten Polschuhen (3) erstreckt und dass den ersten Polschuhen (3) eine entsprechende Anzahl an zweiten Polschuhen (4) zugeordnet sind, die kammartig mit einer sich in Bewegungsrichtung (11) des ersten flächigen Bauteils (1) erstreckenden, die einen Enden der zweiten Polschuhe (4) miteinander verbindenden Verbindungselement ausgebildet sind.

## Claims

1. Operator control device having an operating element with haptic feedback, which operating element has a touch-sensitive operator control area (5), wherein the operating element can be operated by an operator by means of an input element (6), having a first and a second flat component (1, 2) which are composed of a ferromagnetic material and are oriented parallel to one another by way of their large areas and the first flat component (1) can be driven such that it can be displaced in a manner guided horizontally relative to the stationary second flat component (2), wherein the first flat component (1) forms the operator control element or transmits its movement entirely or partially to the operator control element, having a coil (8) or an electrical conductor, which coil or electrical conductor is arranged between the flat components (1, 2) and is associated with a first pole shoe which is connected to the second flat component (2) and projects in relation to the first flat component (1), and wherein a magnetic field can be generated by applying current to the coil (8) or to the conductor, it being possible for the first flat component (1) to be driven by said magnetic field such that it can be displaced horizontally relative to the second flat component (2) from an inoperative position to a displacement position, **characterized in that** the first flat component (1) is connected to a second pole shoe (4, 12) which projects in relation to the second flat component (2) and, in the inoperative position of the first flat component (1), is laterally offset in relation to the first pole shoe (3, 13) in the direction of extent of the flat components (1, 2) such that, when current is applied to the conductor (7) or the coil (8), a magnetic flux (9) occurs from the first pole shoe (3, 13) to the second pole shoe (4, 12).

2. Operator control device according to Claim 1, **characterized in that** a plurality of first pole shoes (3, 13) are connected to the second flat component (2), an electrical conductor (7, 14, 15) and corresponding second pole shoes (4, 12) which are connected to the first flat component (1) being associated with each of said plurality of first pole shoes.

3. Operator control device according to either of the preceding claims, **characterized in that** there is an axial distance between the free end of the first pole shoe (3) and the free end of the second pole shoe (4).

4. Operator control device according to Claim 4, **characterized in that** the end faces of the first and of the second pole shoe (3, 4), which end faces face one another, do not overlap or overlap by way of less than half their extent in the direction (11) of movement of the first flat component (1) in the inoperative position of the first flat component (1), and overlap to a greater extent in the displacement position of the first flat component (1) than in the inoperative position.

5. Operator control device according to either of Claims 1 and 2, **characterized in that** the first pole shoe (3, 13) projects by such an extent in relation to the first flat component (1) and the second pole shoe (4, 12) projects by such an extent from the second flat component (2) that the free end regions of the first pole shoe (3, 13) and of the second pole shoe (4, 12) are situated opposite one another and at a distance in the direction (11) of movement of the first flat component (1).

6. Operator control device according to one of the preceding claims, **characterized in that** the end faces of the pole shoes (3, 4), which end faces are situated opposite one another, extend parallel in relation to one another.

7. Operator control device according to one of the preceding claims, **characterized in that** the end faces of the pole shoes (3, 4), which end faces are situated opposite one another, extend parallel to the planes of the first and the second flat component (1, 2).

8. Operator control device according to one of Claims 1 to 6, **characterized in that** the end faces of the pole shoes (3, 4), which end faces are situated opposite one another, extend in an inclined manner in relation to the planes of the first and the second flat component (1, 2).

9. Operator control device according to one of the preceding claims, **characterized in that** the first flat component (1) can be driven such that it can be displaced horizontally relative to the second flat component (2) from the inoperative position to the displacement position against a spring force.

10. Operator control device according to one of Claims 1 to 8, **characterized in that** a pair of first pole shoes (13) are arranged at a distance from one another in the direction (11) of movement of the first flat component (1), a second pole shoe or a pair of second pole shoes (12) projecting between said first pole shoes, wherein the second pole shoe or the pair of second pole shoes (12) are arranged between the pair of first pole shoes (13) such that they can be moved between the inoperative position and the displacement position, wherein two coils or electrical conductors (14, 15) to which current can be alternately applied are associated with each pair of first pole shoes (13).

11. Operator control device according to one of the preceding claims, **characterized in that** the coil (8) surrounds the first pole shoe (3).

12. Operator control device according to one of Claims 1 to 11, **characterized in that** the first and the second pole shoe extend transverse to the direction (11) of movement and parallel to the first flat component (1), and the electrical conductor (7) is guided along the longitudinal extent of the first pole shoe (3).

13. Operator control device according to Claim 12, **characterized in that** a plurality of first pole shoes (3) are designed in the manner of a comb with a connecting element which extends in the direction (11) of movement of the first flat component (1) and connects the one ends of the first pole shoes (3) to one another, and the electrical conductor (7) extends in a meandering manner through the interspaces between the first pole shoes (3), and **in that** a corresponding number of second pole shoes (4) are associated with the first pole shoes (3), said second pole shoes being designed in the manner of a comb with a connecting element which extends in the direction (11) of movement of the first flat component (1) and connects the one ends of the second pole shoes (4) to one another.

## Revendications

1. Dispositif de commande comprenant un élément d'actionnement à rétroaction haptique, lequel possède une surface de commande (5) tactile, l'élément d'actionnement pouvant être actionné par un opérateur au moyen d'un organe de saisie (6), comprenant un premier et un deuxième élément structural (1, 2) plat, qui se composent d'un matériau ferromagnétique et sont orientés parallèlement l'un à l'autre par leurs grandes surfaces et le premier élément structural (1) plat pouvant être entraîné horizontalement en coulissement en étant guidé par rapport au deuxième élément structural (2) plat fixe, le premier élément structural (1) plat formant l'élément de commande ou transmettant son mouvement intégralement ou partiellement à l'élément de commande, comprenant une bobine (8) ou un conducteur électrique, laquelle ou lequel est disposé(e) entre les éléments structuraux (1, 2) plats et associé(e) à une première pièce polaire, laquelle est reliée au deuxième élément structural (2) plat et fait saillie vers le premier élément structural (1) plat, et un champ magnétique pouvant être généré par mise sous tension de la bobine (8) ou du conducteur, par lequel le premier élément structural (1) plat peut être entraîné en coulissement depuis une position de repos dans une position de coulissement horizontal par rapport au deuxième élément structural (2) plat, **caractérisé en ce que** le premier élément structural (1) plat est relié à une deuxième pièce polaire (4, 12) qui fait saillie vers le deuxième élément structural (2) plat et qui, dans la position de repos du premier élément structural (1) plat, est décalée latéralement par rapport à la première pièce polaire (3, 13) dans le sens de l'extension des éléments structuraux (1, 2) plats de telle sorte que lors de la mise sous tension du conducteur (7) ou de la bobine (8), un flux magnétique (9) émane de la première pièce polaire (3, 13) vers la deuxième pièce polaire (4, 12).

2. Dispositif de commande selon l'une des revendications précédentes, **caractérisé en ce que** plusieurs premières pièces polaires (3, 13) sont reliées au deuxième élément structural (2) plat, auxquelles sont respectivement associés un conducteur électrique (7, 14, 15) et des deuxièmes pièces polaires (4, 12) correspondantes reliées au premier élément structural (1) plat.

3. Dispositif de commande selon l'une des revendications précédentes, **caractérisé en ce qu'**un écart axial se produit entre l'extrémité libre de la première pièce polaire (3) et l'extrémité libre de la deuxième pièce polaire (4).

4. Dispositif de commande selon la revendication 4, **caractérisé en ce que** les surfaces frontales se faisant mutuellement face des première et deuxième pièces polaires (3, 4), dans la position de repos du premier élément structural (1) plat, ne sont pas en superposition, ou de moins de la moitié de leur extension dans le sens du mouvement (11) du premier élément structural (1) plat et, dans la position de coulissement du premier élément structural (1) plat, sont plus en superposition que dans la position de repos.

5. Dispositif de commande selon l'une des revendications 1 et 2, **caractérisé en ce que** la première pièce polaire (3, 13) fait saillie vers le premier élément structural (1) plat d'une cote telle et la deuxième pièce polaire (4, 12) vers le deuxième élément structural (2) plat d'une cote telle que les zones d'extrémité libres de la première pièce polaire (3, 13) et de la deuxième pièce polaire (4, 12) sont opposées à une distance donnée dans le sens du mouvement (11) du premier élément structural (1) plat.

6. Dispositif de commande selon l'une des revendications précédentes, **caractérisé en ce que** les surfaces frontales mutuellement opposées des pièces polaires (3, 4) s'étendent parallèlement l'une à l'autre.

7. Dispositif de commande selon l'une des revendications précédentes, **caractérisé en ce que** les surfaces frontales mutuellement opposées des pièces polaires (3, 4) s'étendent parallèlement aux plans des premier et deuxième éléments structuraux (1, 2) plats.

8. Dispositif de commande selon l'une des revendications 1 à 6, **caractérisé en ce que** les surfaces frontales mutuellement opposées des pièces polaires (3, 4) s'étendent de manière inclinée par rapport aux plans des premier et deuxième éléments structuraux (1, 2) plats.

9. Dispositif de commande selon l'une des revendications précédentes, **caractérisé en ce que** le premier élément structural (1) plat peut être entraîné horizontalement en coulissement par rapport au deuxième élément structural (2) plat depuis la position de repos à la position de coulissement en s'opposant à une force de ressort.

10. Dispositif de commande selon l'une des revendications 1 à 8, **caractérisé en ce qu'**une paire de premières pièces polaires (13) sont disposées à une distance donnée l'une par rapport à l'autre dans le sens du mouvement (11) du premier élément structural (1) plat, entre lesquelles fait saillie une deuxième pièce polaire ou une paire de deuxièmes pièces polaires (12), la deuxième pièce polaire ou la paire de deuxièmes pièces polaires (12) étant disposée entre la paire de premières pièces polaires (13) avec mobilité entre la position de repos et la position de coulissement, deux bobines ou conducteurs électriques (14, 15) étant associé(e)s à chaque paire de premières pièces polaires (13), lesquelles/lesquels peuvent être mis(es) sous tension en alternance.

11. Dispositif de commande selon l'une des revendications précédentes, **caractérisé en ce que** la bobine (8) entoure la première pièce polaire (3).

12. Dispositif de commande selon l'une des revendications 1 à 11, **caractérisé en ce que** la première et la deuxième pièce polaire s'étendent transversalement par rapport au sens de déplacement (11) et parallèlement au premier élément structural (1) plat et le conducteur électrique (7) est guidé le long de l'extension longitudinale de la première pièce polaire (3).

13. Dispositif de commande selon la revendication 12, **caractérisé en ce qu'**une pluralité de premières pièces polaires (3) sont configurées à la manière d'un peigne avec un élément de liaison qui s'étend dans le sens du mouvement (11) du premier élément structural (1) plat et relie ensemble les unes des extrémités des premières pièces polaires (3), et le conducteur électrique (7) s'étend en méandre à travers les espaces intermédiaires entre les premières pièces polaires (3), et **en ce qu'**aux premières pièces polaires (3) sont associées un nombre correspondant de deuxièmes pièces polaires (4) qui sont configurées à la manière d'un peigne avec un élément de liaison qui s'étend dans le sens du mouvement (11) du premier élément structural (1) plat et relie ensemble les unes des extrémités des deuxièmes pièces polaires (4).
